# EUROPÄISCHE PATENTSCHRIFT

(11) **EP 2 093 113 B1**
(45) Veröffentlichungstag und Bekanntmachung des Hinweises auf die Patenterteilung: **03.06.2015**
(21) Anmeldenummer: 09002239.3
(22) Anmeldetag: 18.02.2009
(51) Int. Cl.: B60T 8/17, B60T 8/1766, B60T 8/88

(54) **Bremsanlage für Nutzfahrzeuge**
Braking assembly for commercial vehicles
Installation de frein pour véhicules utilitaires

(30) Priorität: 20.02.2008 DE 102008009948
(43) Veröffentlichungstag der Anmeldung: 26.08.2009
(73) Patentinhaber: KNORR-BREMSE Systeme für Nutzfahrzeuge GmbH, 80809 München (DE)
(72) Erfinder: Horn, Matthias, 71229 Leonberg (DE)
(74) Vertreter: Schönmann, Kurt

(56) Entgegenhaltungen:
- EP-A- 0 357 983
- EP-A- 0 445 575
- DE-A1- 19 707 210

## Beschreibung

Die Erfindung bezieht sich auf eine Bremsanlage für Nutzfahrzeuge gemäß dem Oberbegriff des Patentanspruches 1.

Eine solche Bremsanlage ist aus der EP 0 445 575 A2 bekannt. Diese Bremsanlage für eine Betriebsbremse von Nutzfahrzeugen hat Bremsaktuatoren, Raddrehzahlsensoren, einen Bremskraftgeber, eine elektronische Steuerung und wahlweise Achslastsensoren. Bei vorhandenem und funktionsfähigem Achslastsensor arbeitet die elektronische Steuerung nach dem Prinzip der Differenzschlupfregelung und verwendet dabei Achslastsignale des Achslastsensors zur Ermittlung von Anfangswerten.

Die DE 197 07 210 A1 zeigt eine Bremsanlage mit Raddrehzahlsensoren, Achslastsensoren und einem Bremswertgeber. Ein Bremsanforderungssignal wird in Abhängigkeit von einem Sollverzögerungssignal und einem Achslastsignal sowie aufgrund von Drehgeschwindigkeitssignalen ermittelt.

Nutzfahrzeuge haben zunehmend elektronische Bremssysteme (EBS), welche die rein mechanisch arbeitenden Bremssysteme ersetzen.

Zur Zeit sind zwei grundlegend verschiedene elektronische Bremssysteme auf dem Markt, nämlich Systeme mit Drucksteuerung und Systeme mit Differenzschlupfregelung.

Bei den Systemen mit Drucksteuerung gibt der Fahrer über ein Bremspedal ein elektrisches Bremsanforderungssignal an eine elektronische Steuerung, die dann in Abhängigkeit von dem Bremsanforderungssignal und den Achslasten einen Bremsdruck ermittelt, der den einzelnen Bremszylindern zugeführt wird. Eine solche Drucksteuerung ist beispielsweise in der Bremsanlage "EBS2" der Anmelderin realisiert und seit vielen Jah-ren auf dem Markt. Systeme mit Drucksteuerung zeichnen sich durch folgende Eigenschaften aus:
Sie haben eine einfache Systemstruktur, sind sehr robust und können aufgrund ihrer einfachen Systemstruktur auch in den meisten Werkstätten gewartet und repariert werden. Auch ist dieses System bei den meisten Fahrzeugherstellern anerkannt. Ein weiterer Vorteil ist, daß das Bremspedalgefühl für den Fahrer konstant ist und unabhängig von der jeweiligen Beladung.

Der Hauptnachteil dieser Systeme liegt jedoch in der Notwendigkeit eines oder mehrerer Achslast-Sensoren. Achslastsensoren bei stahlgefederten Fahrzeugen benötigen eine Hebelmechanik, die wartungsanfällig ist und zusätzliche Kosten verursacht. Der Vorteil bei Achslastsensoren liegt naturgemäß darin, daß auch bei einem Beladungswechsel sofort Meßsignale der Achslast vorliegen, die zur Ermittlung und Einsteuerung des jeweiligen Bremsdruckes zur Verfügung stehen. Das Bremssystem benötigt daher auch keine Adaptationsphase, um es an die Beladung und damit die jeweiligen Achslasten anzupassen.

Bremsanlagen mit Differenzschlupfregelung, die ebenfalls von der Anmelderin unter der Bezeichnung "EBS5" vertrieben werden und beispielsweise in der DE 10 137 148 A1 beschrieben sind, benötigen dagegen keine Achslastsensoren. Auf ein elektronisches Bremsanforderungssignal wird der Bremsdruck an den einzelnen Achsen in Abhängigkeit des Bremsanforderungssignales und in Abhängigkeit eines vorgegebenen Differenzschlupfes zwischen Vorder- und Hinterachse geregelt.

Problematisch ist dabei aber, daß diese Systeme üblicherweise drei kaskadierte Regelkreise verwenden, nämlich einen ersten Regelkreis für die Höhe des Bremsdruckes, einen zweiten Regelkreis für die Bremsdruckverteilung auf die einzelnen Achsen im Zugfahrzeug und einen dritten Regelkreis für die Bremsdruckverteilung zwischen Zugfahrzeug und einem Anhänger (Koppelkraftregelung). Weiter müssen die Eigenschaften der Reifen bekannt sein, wie z.B. die einzelnen Raddurchmesser, die Steifigkeit der Reifen, etc. Diese Systeme sind zwar sehr robust gegen Überschwankungen der Bremskennwerte, jedoch nur unter der obigen Annahme, daß die Eigenschaften der Reifen bekannt sind.

Ein weiterer Nachteil dieser Systeme ist, daß sie eine Adaptationsphase benötigen, was bei Beladungswechsel und schwierigen Streckenverhältnissen auch längere Zeit und eine Vielzahl von Bremsvorgängen erfordern kann. Wird beispielsweise ein Nutzfahrzeug auf kurzen Strecken von wenigen Kilometern zur Beförderung schwerer Lasten eingesetzt, beispielsweise im Straßenbau, wo das Fahrzeug abwechselnd voll beladen und leer die kurze Strecke fährt, kann es vorkommen, daß die Adaptation innerhalb der Fahrstrecke gar nicht vollständig stattfinden kann. Daraus resultiert auch, daß das Pedalgefühl für den Fahrer nicht konstant ist und nach einer Beladungsänderung erst dann wieder den vom Fahrer gewohnten normalen Wert erreicht, wenn die beschriebene Adaptation vollständig erreicht ist. Weiter haben diese Systeme das Problem, daß die Diagnose und Wartbarkeit nur durch hoch qualifiziertes Fachpersonal möglich ist und damit in vielen Werkstätten nicht durchgeführt werden kann. Aufgrund der genannten drei kaskadierten Regelkreise muß für eine Regelstabilität die Zeitkonstante der einzelnen Regelkreise unterschiedlich sein. In der Praxis arbeitet der Regelkreis für die Fahrzeugverzögerung ca. zehn Mal schneller als der Regelkreis für die Koppelkraft zwischen Zugfahrzeug und Anhänger. Ist beispielsweise der Stellbereich für eine Koppelkraftregelung zwischen Zugfahrzeug und Anhänger zu klein gewählt, so muß das Zugfahrzeug den Verzögerungsfehler des Anhängers übernehmen. Verzögerungsfehler im Zugfahrzeug werden vom Verzögerungsregler ausgeglichen, der aber aussschließlich auf die Bremskräfte des Zugfahrzeuges wirkt, was eine Verschlechterung der Abstimmung eines Zugverbundes aus Zugfahrzeug und Anhänger zur Folge hat.

Aufgabe der Erfindung ist es daher, die Bremsanlage der eingangs genannten Art dahingehend zu verbessern, daß sie universell einsetzbar ist und auch bei Ausfall eines Achslastsensors noch sicher arbeitet.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, die beiden bekannten Systeme der Drucksteuerung und der Differenzschlupfregelung miteinander zu kombinieren, was auf zwei Arten erfolgen kann:
a) Ist ein Achslastsensor vorhanden, so erfolgt die Steuerung der Betriebsbremse mit der Drucksteuerung, wobei die Differenzschlupfregelung als "Rückfallebene" dient, für den Fall fehlerhafter oder ausgefallener Achslastsensoren.
b) Der Achslastsensor bzw. die Achslastsensoren werden für das Untersystem der Differenzschlupfregelung für eine Adaptation verwendet. Damit kann ein Beladungswechsel schneller erkannt werden und die Adaptation wird schneller durchgeführt.

Ein Beladungswechsel wird durch den Achslastsensor sofort erkannt und kann damit die von der Differenzschlupfregelung "gelernten", d.h. adaptierten, Parameter schnell zurücksetzen. Die Differenzschlupfregelung wird damit rasch initialisiert. Auch kann mit dem Signal des Achslastsensors bzw. der Achslastsensoren eine Plausibilitätsprüfung der Adaptationswerte der Differenzschlupfregelung durchgeführt werden.

Im folgenden wird die Erfindung anhand eines Ausführungsbeispieles im Zusammenhang mit der Zeichnung ausführlicher erläutert. Es zeigt:
- Fig. 1: ein Prinzipschaltbild einer Bremsanlage nach der Erfindung;
- Fig. 2: ein Flußdiagramm eines Gesamtsystems einer Bremsanlage nach der Erfindung;
- Fig. 3: ein Flußdiagramm zur Erläuterung einer ersten Arbeitsweise der in Fig. 1 verwendeten elektronischen Steuerung; und
- Fig. 4: ein Flußdiagramm zur Erläuterung einer zweiten Arbeitsweise der in Fig. 1 verwendeten elektronischen Steuerung.

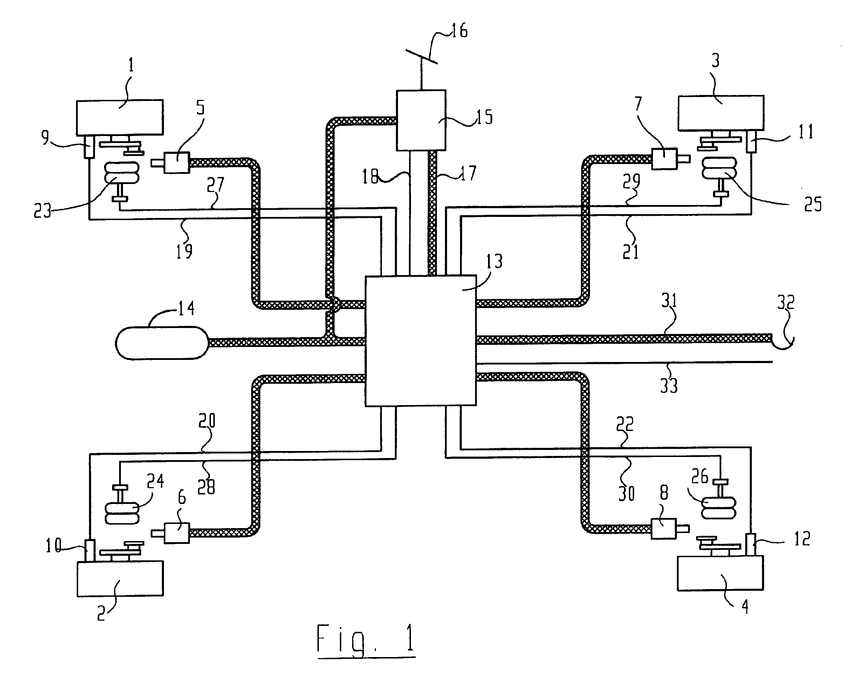

Fig. 1 zeigt die Bremsanlage eines Zugfahrzeuges mit zwei Vorderrädern 1 und 2 und zwei Hinterrädern 3 und 4, denen jeweils ein Bremsaktuator, hier in Form eines Bremszylinders 5, 6, 7, 8, und jeweils ein Raddrehzahlsensor 9, 10, 11, 12 zugeordnet ist.

Eine elektropneumatische Steuerung 13 wird aus einem Vorratsbehälter 14 mit Druckluft versorgt. Weiter wird auch ein Bremskraftgeber 15, der ein vom Fahrer zu betätigendes Bremspedal 16 aufweist, mit der Druckluft aus dem Vorratsbehälter versorgt. Der Bremskraftgeber 15 ist über eine pneumatische Leitung 17 und eine elektrische Leitung 18 mit der Steuerung 13 verbunden. Bei Ausfall der Elektronik kann die Anlage somit in herkömmlicher Weise rein pneumatisch arbeiten, indem der Fahrer über das Bremspedal 16 einen Steuerdruck einstellt, der über die pneumatische Leitung 17 an die Steuerung 13 geliefert wird, welche über entsprechende, nicht dargestellte Ventile Bremsdruck zu den Bremszylindern 5-8 liefert.

Bei regulärem Betrieb wird über die elektrische Leitung 18 ein Bremsanforderungssignal an die Steuerung 13 geliefert. Die Steuerung 13 empfängt weiterhin elektrische Signale der Raddrehzahlsensoren 9, 10, 11, 12, was über elektrische Leitungen 19, 20, 21 und 22 erfolgt. Schließlich sind vier Achslastsensoren 23, 24, 25, 26 vorgesehen, die über elektrische Leitungen 27, 28, 29, 30 mit der Steuerung 13 verbunden sind und permanent ein Achslastsignal an die Steuerung 13 liefern. Im dargestellten Ausführungsbeispiel ist jedem Rad 1, 2, 3, 4 ein entsprechender Achslastsensor 23, 24, 25, 26 zugeordnet. Dem Fachmann ist klar, daß auch eine andere Anordnung von Achslastsensoren verwendet werden kann. Bei luftgefederten Fahrzeugen sind die Achslastsensoren ohnehin in den Federbälgen der Federung integriert. Bei stahlgefederten Fahrzeugen sind die Achslastsensoren über ein Hebelgestänge zwischen Fahrzeugaufbau und Achse angeordnet, wobei dem Fachmann eine Vielzahl unterschiedlicher Achslastsensoren bekannt ist.

Die Steuerung 13 ermittelt aus dem Bremsanforderungssignal auf der elektrischen Leitung 18 in Abhängigkeit von den Achslastsignalen auf den Leitungen 19, 20, 21 und 22 und ggf. den Raddrehzahlsignalen auf den Leitungen 19, 20, 21 und 22 dann den jeweiligen Bremsdruck für die einzelnen Bremszylinder 5, 6, 7 und 8, der dann über nicht dargestellte Ventile der Steuerung 13 zu den einzelnen Bremszylindern eingesteuert wird, wobei der Bremsdruck zwischen den Rädern der Vorderachse und den Rädern der Hinterachse entsprechend den Achslasten nach vorgegebenen Kriterien verteilt wird.

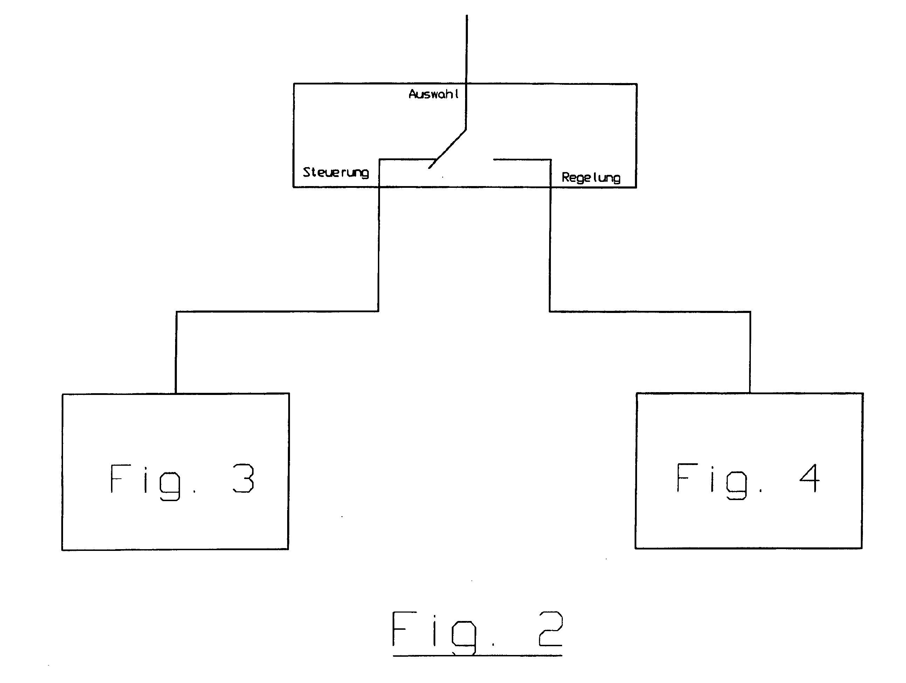

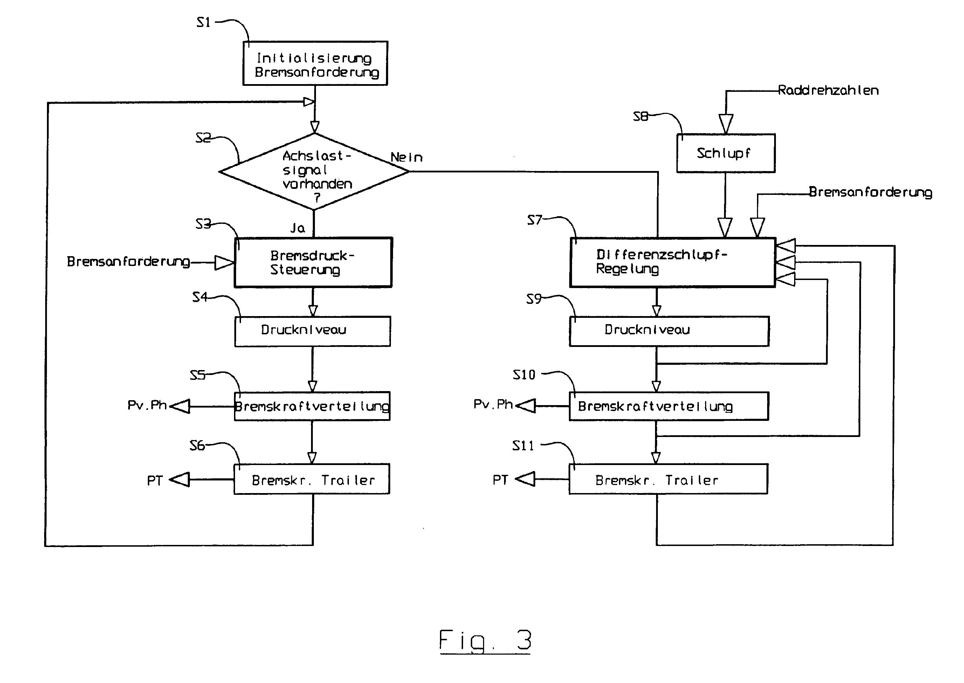

Fig. 2 zeigt das Prinzip der zwei Betriebsarten, nämlich die einer Bremsdrucksteuerung, die im Zusammenhang mit Fig. 3 näher erläutert wird sowie die einer Differenzschlupfregelung, die im Zusammenhang mit

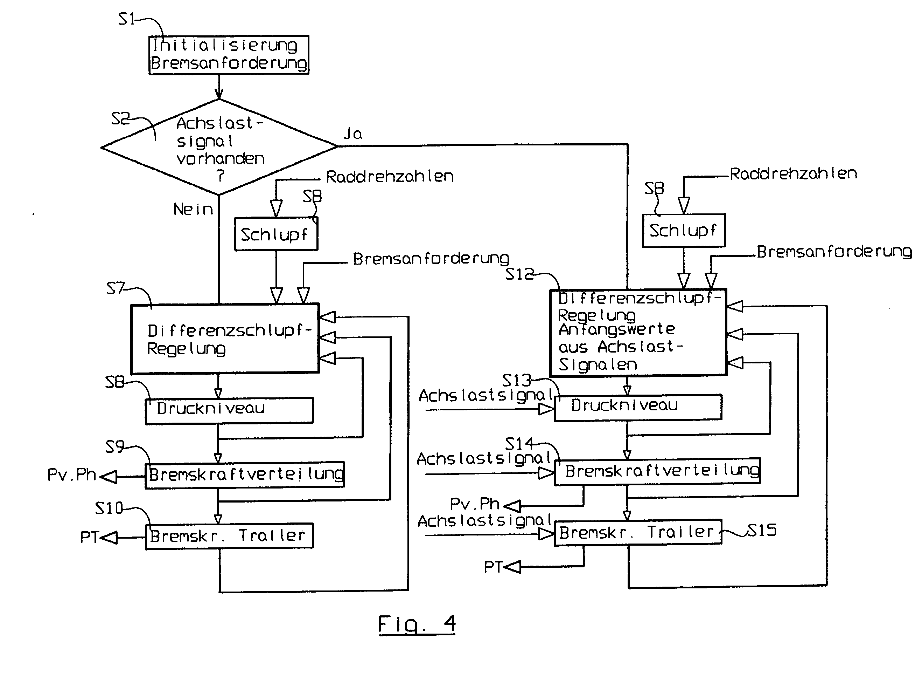

Fig. 4 näher erläutert wird. Durch Setzen eines Schalters, Jumpers, einer Lötbrücke oder ähnlichem, kann die gewünschte Betriebsart ausgewählt werden.

Es wird jetzt auf die erste Betriebsart der Fig. 3 Bezug genommen. Dort sind in einem Flußdiagramm die von der Steuerung 13 durchzuführenden Schritte dargestellt. Mit Einschalten der Zündung des Fahrzeuges beginnt in einem Schritt S1 die Initialisierung des Systems. Dabei wird davon ausgegangen, daß ein Bremsanforderungssignal, beispielsweise über ein Bremspedal des Fahrzeuges, vorliegt. Im Schritt S2 wird überprüft, ob ein oder mehrere Achslastsignale von den Achslastsensoren 23-26 vorliegen. Ist dies der Fall, so wird im Schritt S3 die Bremsdrucksteuerung aktiviert, die aufgrund einer Bremsanforderung eine Sollverzögerung ermittelt und daraus im Schritt S4 ein Druckniveau festlegt, beispielsweise aufgrund einer gespeicherten Tabelle, in welcher ein funktionaler Zusammenhang zwischen Bremsanforderungssignal und Druckniveau gespeichert ist. Im Schritt S5 wird dann die Bremskraftaufteilung auf Vorder- und Hinterachse aufgrund des Achslastsignales vorgenommen und die Bremskraft bzw. der Bremsdruck PV für die Vorderachse und die Bremskraft bzw. der Bremsdruck PH für die Hinterachse ermittelt. Im Schritt S6 wird die Bremskraft bzw. der Bremsdruck PT für den Anhänger ermittelt. Darauf werden die Bremskräfte oder Drücke in die entsprechenden elektrischen oder pneumatischen Leitungen eingesteuert. Selbstverständlich können weitere Parameter, wie Blockierschutz, Giermomentbegrenzung, µ-Split-Bedingungen etc., berücksichtigt werden. Bei rein elektrischer Steuerung werden anstelle der Bremsdrücke PV, PH und PT entsprechende Sollwerte für Stellsignale von elektrisch angetriebenen Aktuatoren ermittelt.

Die Überprüfung im Schritt S2 wird ständig wiederholt, solange ein Bremsanforderungssignal vorliegt.

Fällt während einer Bremsanforderung das Achslastsignal aus, so wird dies im Schritt S2 erkannt und im Schritt S7 wird auf eine Differenzschlupfregelung umgeschaltet. Bei der Bremsdruckregelung wird aus Raddrehzahlsignalen ein Differenzschlupf als Regelungsgröße im Schritt S8 gebildet und die Differenzschlupfregelung arbeitet im Prinzip aufgrund der Eingangsgrößen Bremsanforderung und Differenzschlupf. Aus diesen beiden Größen wird dann in drei kaskadierten Regelkreisen in an sich bekannter Weise die Regelung vorgenommen. In einem ersten Regelkreis wird im Schritt S9 das Druckniveau festgelegt, womit der erste Regelkreis geschlossen ist. In einem zweiten, nachgeordneten Regelkreis wird im Schritt S10 die Bremskraftverteilung zwischen Vorder- und Hinterachse vorgenommen und im dritten ebenfalls nachgeordneten Regelkreis wird in einem Schritt S11 die Bremskraft für den Anhänger ermittelt und als Steuersignal PT der Bremse des Anhängers zugeführt. Die drei genannten Regelkreise arbeiten mit unterschiedlichen Zeitkonstanten, wobei durch die dargestellte Rückführung zum Schritt S7 ständig eine Adaptation vorgenommen wird.

Fig. 4 zeigt die zweite Betriebsart, die im Prinzip eine Differenzschlupfregelung ist und in den Schritten S1, S2, S7-S11 in gleicher Weise arbeitet, wie im Zusammenhang mit Fig. 3 beschrieben.

Ist die Auswahl in Fig. 2 auf "Regelung" vorgenommen und wird im Schritt S2 der Fig. 4 festgestellt, daß ein Achslastsignal vorhanden ist, so geht das System zum Schritt S12 und führt im Prinzip eine Differenzschlupfregelung unter Berücksichtigung von Achslastsignalen durch. An dieser Stelle sei darauf hingewiesen, daß Achslastsignale sowohl von Achslastsensoren stammen können als auch in anderer Weise durch eine "Achslastschätzung" vorgenommen werden können, in an sich bekannter Weise aufgrund des dynamischen Verhaltens des Fahrzeuges Parameter, wie Gesamtgewicht, Schwerpunkthöhe, Achslastverteilung etc., ermittelt werden. Im Stand der Technik ist eine Vielzahl von Algorithmen hierfür bekannt.

In den drei Regelkreisen der Differenzschlupfregelung kann das Achslastsignal als Anfangswert für die Adaptation verwendet werden, um die Regelgrößen Druckniveau (S13), Bremskraftverteilung (S14) und Bremskraftanhänger (S15) zu ermitteln.

Während bei bekannten Differenzschlupfregelungen mit drei kaskadierten Regelkreisen eine vollständige Adaptation erst nach 30 bis 50 Bremsvorgängen erreicht wird, erreicht man mit der Erfindung auch bei einer Differenzschlupfregelung eine sehr viel schnellere Adaptation, da man von bekannter Achslast als Anfangswert ausgeht und somit schon etwa nach maximal zehn Bremsvorgängen eine Adaptation erreicht.

## Patentansprüche

1. Bremsanlage für eine Betriebsbremse von Nutzfahrzeugen mit Bremsaktuatoren, Raddrehzahlsensoren, einem Bremskraftgeber und einer elektronischen Steuerung, wobei die elektronische Steuerung (13) bei vorhandenem und funktionsfähigem Achslastsensor (23-26) nach dem Prinzip der Differenzschlupfregelung arbeitet und dabei Achslastsignale des Achslastsensors (23-26) zur Ermittlung von Anfangswerten verwendet,
**dadurch gekennzeichnet, daß** bei Differenzschlupfregelung der Stellbereich der Differenzschlupfregelung durch Werte des funktionsfähigem Achslastsensors (23-26) oder einer Achslastschätzung begrenzt wird und
daß alternativ die elektronische Steuerung (13) bei vorhandenem und funktionsfähigem Achslastsensor (23-26) nach dem Prinzip der Bremskraftsteuerung die Bremskraft in Abhängigkeit von einem Bremsanforderungssignal des Bremskraftgebers (15) und in Abhängigkeit von Achslastsignalen des Achslastsensors (23-26) einstellt und bei Ausfall des Achslastsensors nach dem Prinzip der Differenzschlupfregelung arbeitet.

2. Bremsanlage nach Anspruch 1, **dadurch gekennzeichnet, daß** die elektronische Steuerung (13) bei Ausfall des Achslastsensors (23-26) für eine Initialisierung und Adaptierung der Differenzschlupfregelung Anfangswerte verwendet, die von zuvor gespeicherten Werten des zuvor funktionsfähigen Achslastsensors abgeleitet sind.

## Claims

1. Braking assembly for a service brake of commercial vehicles, comprising brake actuators, wheel revolutions sensors, a brake force generator and an electronic controller, in which, when an axle load sensor (23 - 26) is provided and operable, said electronic controller (13) operates according to the principle of brake slip control using axle load signals of said axle load sensor (23 - 26) for determining initial values,
**characterised in that**, in the presence of a differential brake slip controller, the range of adjustment of the differential slip controller is limited by values of said operable axle load sensor (23 - 26) or an axle load estimate, and
that alternatively, in the presence of an operable axle load sensor (23 - 26), said electronic controller (13) adjusts the brake force according to the principle of brake force control in response to a brake demand signal of said brake force generator (15) and in response to axle load signals of said axle load sensor (23 - 26) and operates according to the principle of differential slip control in the event of failure of said axle load sensor.

2. Braking assembly according to Claim 1, **characterised in that** in the event of failure of said axle load sensor (23 - 26) said electronic controller uses initial values for initialising and adapting said differential slip controller, which are derived from previously stored values of the previously operable axle load sensor.

## Revendications

1. Installation de frein pour un frein de service des véhicules utilitaires, comprenant des actionneurs de freinage, des capteurs de vitesse de roue, un générateur de force de freinage et un module de commande électronique, dans lequel, quand un détecteur de la charge à l'essieu (23 - 26) est disposé et opérationnel, ledit module de commande électronique (13) fonctionne selon le principe de régulation de glissement différentiel, en employant des signaux de charge à l'essieu dudit détecteur de la charge à l'essieu (23 - 26) pour la détection des valeurs initiales,
**caractérisé en ce qu'**au cas de l'arrangement d'un module de régulateur différentiel du glissement au freinage, la gamme de l'ajustement du module de régulateur différentiel du glissement est restreinte par des valeurs dudit détecteur de la charge à l'essieu (23 - 26) opérationnel ou d'une estimation de la charge à l'essieu, et
**en ce que** selon une alternative, en présence d'un détecteur opérationnel de la charge à l'essieu (23 - 26), ledit module de commande électronique (13) ajuste la force de freinage selon le principe d'un régulateur de la force de freinage en réponse à un signal de demande de freinage dudit générateur de force de freinage (15) et en réponse aux signaux de la charge à l'essieu dudit détecteur de la charge à l'essieu (23 - 26) et fonctionne selon le principe de régulation différentielle de glissement au cas de défaillance dudit détecteur de la charge à l'essieu.

2. Installation de frein selon la revendication 1, **caractérisé en ce qu'**au cas de défaillance dudit détecteur de la charge à l'essieu (23 - 26), ledit module de commande électronique utilise des valeurs initiales pour l'initialisation et l'adaptation dudit régulateur différentiel du glissement, qui sont dérivées des valeurs mises en mémoire auparavant dudit détecteur de la charge à l'essieu opérationnel auparavant.
